# FASCICULE DE BREVET EUROPEEN

(11) **EP 3 083 305 B1**
(45) Date de publication et mention de la délivrance du brevet: **08.01.2020**
(21) Numéro de dépôt: 14827810.4
(22) Date de dépôt: 09.12.2014
(51) Int. Cl.: B60K 6/365, B60K 6/40, B60K 6/48, F16F 15/14

(54) **ENSEMBLE DE TRANSMISSION POUR VÉHICULE AUTOMOBILE ET VÉHICULE AUTOMOBILE**
GETRIEBEANORDNUNG FÜR EIN KRAFTFAHRZEUG UND KRAFTFAHRZEUG
TRANSMISSION ASSEMBLY FOR MOTOR VEHICLE AND MOTOR VEHICLE

(30) Priorité: 20.12.2013 FR 1363321
(43) Date de publication de la demande: 26.10.2016
(73) Titulaire: Valeo Embrayages, 80009 Amiens Cedex 2 (FR)
(72) Inventeur: LEBAS, Gilles, F-80800 Villers Bretonneux (FR); LEBEAU, Fabien, F-02100 Harly (FR)
(74) Mandataire: Cardon, Nicolas
(86) Numéro de dépôt international: PCT/FR2014/053237
(87) Numéro de publication internationale: WO 2015/092217

(56) Documents cités:
- DE-A1- 19 915 926
- DE-A1- 19 923 316
- DE-A1-102008 040 498
- DE-A1-102012 203 611
- DE-A1-102012 219 028
- DE-C1- 19 704 786
- US-A1- 2011 162 480

## Description

### Domaine technique de l'invention

L'invention se rapporte au domaine des transmissions pour véhicule automobile. Elle se rapporte notamment à un ensemble de transmission destiné à être disposé entre un moteur thermique et une boîte de vitesses d'un véhicule automobile.

Elle concerne notamment un ensemble de transmission pour un véhicule automobile de type hybride dans lequel une machine électrique est disposée, dans la chaîne de transmission, entre le moteur et la boîte de vitesses, comme décrit dans le document DE 10 2008 040 498 A1.

### Etat de la technique

Dans l'état de la technique, il est connu des ensembles de transmission, disposés entre la boîte de vitesses et le moteur thermique, comportant une machine électrique et un embrayage, côté moteur, permettant d'accoupler en rotation le vilebrequin du moteur thermique au rotor de la machine électrique. Ainsi, il est possible de couper le moteur thermique interne à chaque arrêt et de le redémarrer grâce à la machine électrique. La machine électrique peut également constituer un frein électrique ou apporter un surplus d'énergie au moteur thermique pour l'assister ou éviter que celui-ci ne cale. La machine électrique peut également assurer l'entraînement du véhicule. Lorsque le moteur tourne, la machine électrique joue le rôle d'un alternateur.

Afin de filtrer les vibrations engendrées par les acyclismes du moteur thermique, il est connu d'intégrer aux ensembles de transmission précités des amortisseurs pendulaires également appelés oscillateurs pendulaires ou pendules. A défaut de tels amortisseurs, des vibrations pénétrant dans la boîte de vitesses y provoqueraient en fonctionnement des chocs, bruits ou nuisances sonores particulièrement indésirables. De tels ensembles de transmission équipés d'un amortisseur pendulaire sont notamment divulgués dans les documents US2011/0162480 et WO12136179.

Les performances de filtration des acyclismes d'un amortisseur pendulaire augmentent notamment avec la masse des masselottes pendulaires utilisées. Dès lors, afin d'obtenir des performances satisfaisantes, les amortisseurs pendulaires de l'art antérieur présentent des encombrements importants. Or, un ensemble de transmission hybride tel que décrit ci-dessus est soumis à de fortes contraintes d'encombrement afin de permettre son implantation entre le moteur et la boîte de vitesses du véhicule.

Dès lors, les amortisseurs pendulaires intégrés aux ensembles de transmission hybrides tels que décrits dans l'art antérieur ne permettent pas d'obtenir des performances de filtration satisfaisantes compte-tenu des contraintes d'encombrement à satisfaire. Ceci est d'autant plus problématique que le développement de nouvelles motorisations économes en carburant conduit à augmenter leur acyclismes.

### Objet de l'invention

Une idée à la base de l'invention est de proposer un ensemble de transmission pour véhicule hybride qui soit équipé de moyens permettant d'absorber efficacement les vibrations.

L'invention fournit un ensemble de transmission selon la revendication indépendante 1.

Ainsi, le réducteur mécanique est arrangé entre l'amortisseur pendulaire et l'arbre intermédiaire de telle sorte que les effets de l'amortisseur pendulaire sur les acyclismes de rotation de l'arbre intermédiaire s'en trouvent amplifiés. Ainsi, un tel agencement permet à l'amortisseur pendulaire d'obtenir des performances de filtration satisfaisante tout en satisfaisant aux contraintes d'encombrement.

En outre, le réducteur mécanique permet d'augmenter les performances de la machine électrique en limitant son fonctionnement à bas régime dans lequel son rendement est plus faible.

Selon d'autres modes de réalisation avantageux, un tel ensemble peut présenter une ou plusieurs des caractéristiques suivantes :
- l'arbre intermédiaire est destiné à être mis en liaison cinématique avec le vilebrequin par l'intermédiaire d'un embrayage.
- le réducteur mécanique est un train d'engrenages épicycloïdal.
- le train d'engrenages épicycloïdal s'étend radialement à l'intérieur du rotor. Ainsi, l'impact du réducteur mécanique sur l'encombrement global de l'ensemble de transmission est négligeable.
- le train d'engrenages épicycloïdal comporte un première couronne dentée portée par le moyeu de support du rotor, une seconde couronne dentée fixée à l'arbre intermédiaire et des pignons satellites montés mobiles en rotation sur l'élément de support et s'étendant à l'intérieur desdites première et seconde couronnes dentées, lesdits pignons satellites étant chacun pourvus d'une première denture en prise avec la première couronne dentée et d'une seconde denture en prise avec la seconde couronne dentée. Un tel train d'engrenages épicycloïdal offre un encombrement restreint et un équilibre des efforts satisfaisant.
- le rotor est porté par un moyeu de support et l'organe de support de l'amortisseur pendulaire est fixé sur le moyeu de support du rotor.
- le stator comporte des bobines circonférentiellement réparties autour de l'axe X et un interconnecteur de forme annulaire, pour interconnecter les bobines, ledit interconnecteur étant décalé axialement par rapport aux bobines, l'amortisseur pendulaire étant, au moins partiellement, logé radialement à l'intérieur de l'interconnecteur.
- l'ensemble de transmission comporte un amortisseur de torsion à organes élastiques agencé pour transmettre un couple et amortir les acyclismes de rotation entre l'arbre intermédiaire et l'arbre d'entrée de la boîte de vitesses et l'amortisseur pendulaire est au moins partiellement disposé dans le plan de l'amortisseur de torsion à organes élastiques et s'étend radialement au-dessus de l'amortisseur de torsion à organes élastiques.
- l'amortisseur pendulaire est intégré dans le corps du rotor.
- le rotor comporte un corps formé d'un paquet de tôles empilées axialement et une partie des tôles du paquet de tôles présentent des découpes définissant des espaces de logement des masselottes pendulaires.
- les masselottes pendulaires sont montées mobiles sur l'organe de support par l'intermédiaire de rouleaux de guidage engagés dans des orifices des masselottes et l'organe de support des masselottes comporte des flasques annulaires qui sont disposés axialement de part et d'autre des espaces de logement des masselottes et sont pourvus d'orifices dans lesquels sont engagées les extrémités des rouleaux de guidage.
- les flasques annulaires sont formés par des tôles du paquet de tôles.
- l'organe de support et/ou les masselottes pendulaires sont réalisés dans un matériau amagnétique.

Selon un mode de réalisation, l'invention fournit un véhicule automobile équipé d'un ensemble de transmission précité.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

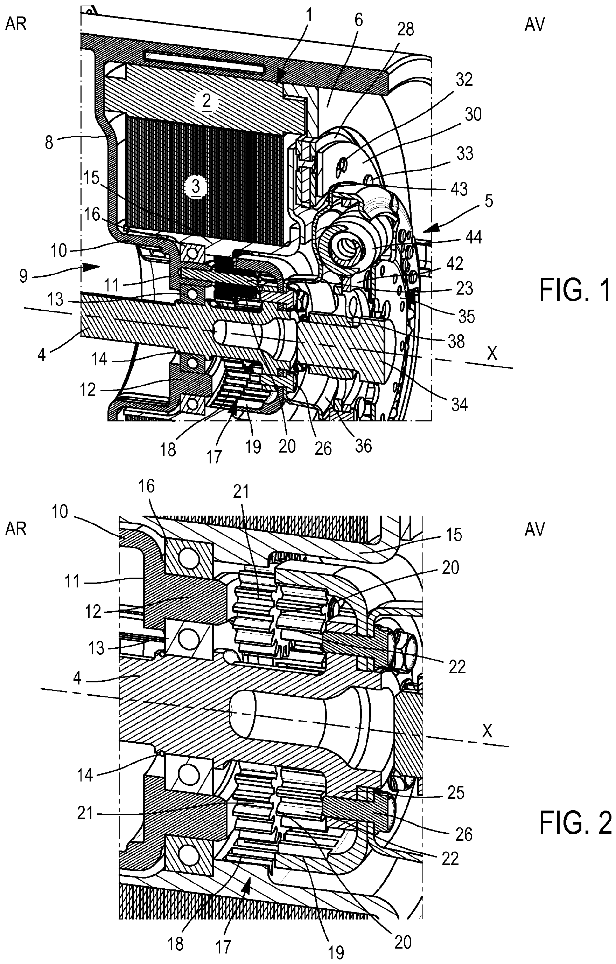

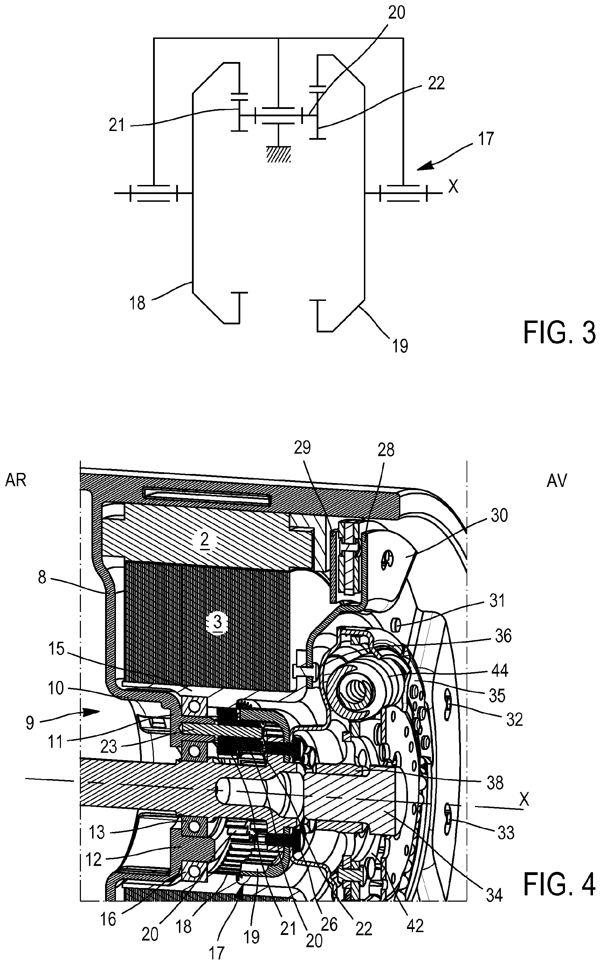

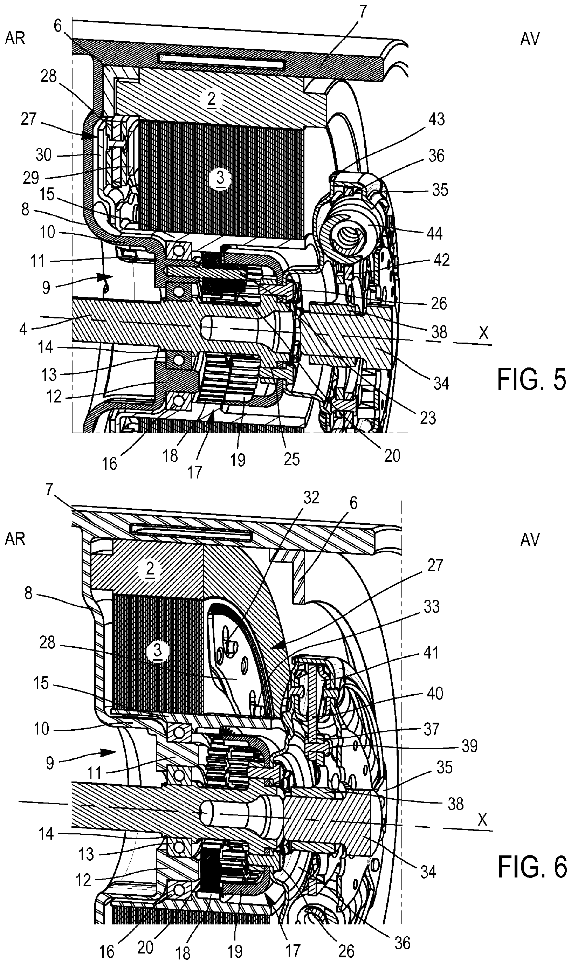

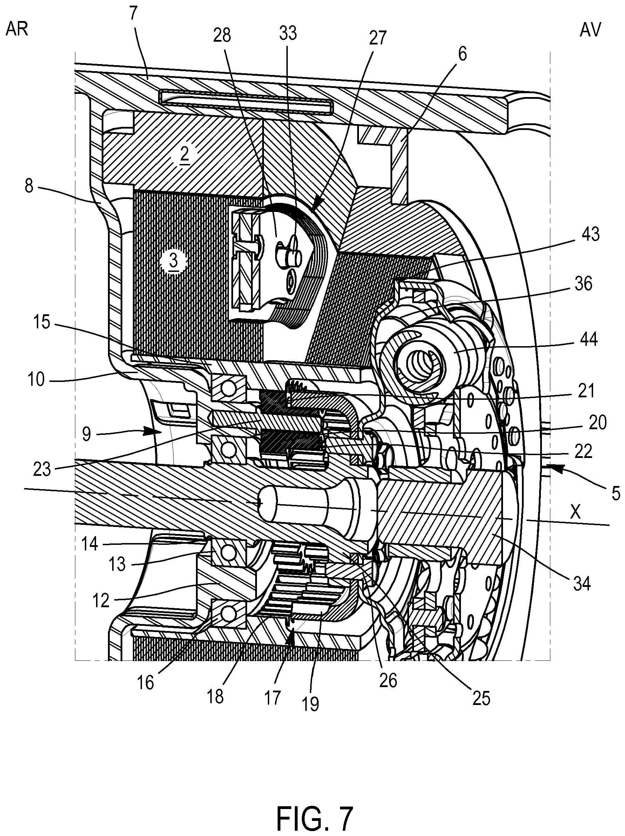

Sur ces figures :
- **La** **figure 1** est une vue partielle en coupe d'un ensemble de transmission destiné à être disposé entre un moteur thermique et une boîte de vitesses selon un premier mode de réalisation de l'invention ;
- **La** **figure 2** est une vue détaillée du réducteur mécanique agencé pour coupler le rotor de la machine électrique et l'arbre intermédiaire.
- **La** **figure 3** est une représentation schématique du réducteur mécanique de la figure 2.
- **Les** **figures 4** **et** **5** sont des vues partielles, en coupe, d'un ensemble de transmission respectivement selon un second et troisième modes de réalisation.
- **Les** **figures 6** **et** **7** sont des vues partielles en coupe d'un ensemble de transmission respectivement selon un quatrième et cinquième modes de réalisation.

### Description détaillée de modes de réalisation

Dans la description et les revendications, on utilisera, les termes "externe" et "interne" ainsi que les orientations "axiale" et "radiale" pour désigner, selon les définitions données dans la description, des éléments de l'ensemble de transmission. Par convention, l'orientation "radiale" est dirigée orthogonalement à l'axe X de rotation de l'ensemble de transmission déterminant l'orientation "axiale" et, de l'intérieur vers l'extérieur en s'éloignant dudit axe X, l'orientation "circonférentielle" est dirigée orthogonalement à l'axe X de rotation de l'ensemble de transmission et orthogonalement à la direction radiale. Les termes "externe" et "interne" sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par arrière et un élément destiné à être placé proche de la boîte de vitesse étant désigné par avant.

En se reportant à la figure 1, on voit un ensemble de transmission, destiné à être disposé entre un moteur thermique et une boîte de vitesses. L'ensemble de transmission comporte une machine électrique 1 comprenant un stator 2 externe et un rotor 3 interne pourvue d'une ouverture centrale et un arbre intermédiaire 4 passant au travers de l'ouverture centrale du rotor 3.

L'arbre intermédiaire 4 comporte une extrémité arrière coopérant avec un embrayage, non représenté, permettant d'accoupler en rotation le vilebrequin du moteur thermique à l'arbre intermédiaire 4. Pour ce faire, l'extrémité arrière de l'arbre intermédiaire 4 est équipée de cannelures, non représentées, destinées à coopérer avec un moyen cannelé d'un disque d'embrayage. L'embrayage comporte un couvercle d'embrayage fixé sur la périphérie externe du volant moteur, un plateau de pression mobile, un diaphragme annulaire sollicitant axialement le plateau de pression et une butée d'embrayage apte à faire pivoter le diaphragme afin de déplacer le plateau de pression. Le plateau de pression est ainsi apte à se déplacer vers une position embrayée dans laquelle il pince les garnitures de friction du disque d'embrayage contre un plateau de réaction porté par le volant moteur. En position embrayée, le couple moteur est alors transmis du vilebrequin du moteur thermique vers l'arbre intermédiaire 4. Selon un mode de réalisation, le volant moteur est un double volant amortisseur.

Par ailleurs, l'arbre intermédiaire 4 est destiné à être couplé en rotation à un arbre d'entrée 34 de la boîte de vitesses par l'intermédiaire d'un amortisseur de torsion 5. L'ensemble est donc apte à transmettre un couple entre le vilebrequin du moteur thermique et l'arbre d'entrée de la boîte de vitesses.

La machine électrique 1 est une machine électrique tournante réversible du type alterno-démarreur. En mode démarreur, l'embrayage est embrayé et la machine électrique permet le démarrage du moteur thermique. En mode alternateur, la machine électrique permet de recharger une batterie du véhicule et/ou d'alimenter les organes ou équipements consommateurs d'énergie lorsque le moteur thermique tourne. Elle est en outre configurée pour récupérer de l'énergie lors du freinage du véhicule. La machine électrique 1 peut notamment être configurée pour arrêter le moteur thermique, par exemple, au feu rouge ou dans les bouchons, et le redémarrer ensuite (fonction Stop and Go en Anglais). Dans un mode de réalisation, elle est apte à fournir un surplus de puissance (fonction boost en Anglais). Par ailleurs, la machine électrique est apte à entraîner le véhicule au moins sur une courte distance, l'embrayage étant alors désengagé et le moteur thermique arrêté.

La machine électrique 1 est une machine électrique polyphasée. Le stator de la machine électrique comporte un bobinage équipé d'une pluralité de bobines réparties circonférentiellement autour de l'axe X. Les bobines sont interconnectées entre elles à l'aide d'un interconnecteur 6. Sur les figures 1, 2, 4, 6 et 7, l'interconnecteur est décalé axialement par rapport aux bobines, en direction de la boîte de vitesses. Dans le mode de réalisation de la figure 5, l'interconnecteur 6 est au contraire décalé axialement, par rapport aux bobines, en direction du moteur thermique.

Dans un mode de réalisation, l'interconnecteur 6 comporte quatre cadres de forme annulaire s'étendant suivant un plan radial. Les cadres sont électriquement conducteurs en étant par exemple en cuivre ou avantageusement en un autre matériau métallique soudable. Ces cadres sont empilés axialement les uns sur les autres et isolés électriquement les uns des autres. De préférence, les cadres sont noyés dans un corps réalisé en matériau électriquement isolant, tel que de la matière plastique. Chaque cadre porte sur sa périphérie interne des pattes s'étendant en saillie radiale vers l'intérieur du cadre, qui sont soudées aux extrémités des bobines du stator. Chaque bobine comporte une première extrémité appelée « entrée » destinée à être connectée avec l'un des cadres de phase et une deuxième extrémité appelée « sortie » destinée à être reliée au cadre de neutre. Les « entrées » des bobines sont alternativement connectées aux cadres de phases. Chaque cadre de phase comporte sur sa périphérie externe un terminal de connexion pour l'interconnexion avec un connecteur de puissance.

Le rotor 3 est un rotor à aimants permanents. Il comporte un corps formé d'un paquet de tôles empilées selon la direction axiale et des aimants permanents, non représentés, implantés radialement dans les tôles du paquet de tôles, en périphérie externe du rotor 3.

Le stator 2 est porté par un élément de support 7 qui est, d'une part, destiné à être fixé sur le bloc moteur et, d'autre part, destiné à être fixé sur le carter de la boîte de vitesses. L'élément de support 7 est inséré entre le carter de la boîte de vitesses et le bloc-moteur et est agencé pour permettre la fixation de la boîte de vitesses au bloc-moteur. En d'autres termes, l'élément de support 7 forme, en quelque sorte, une entretoise entre le bloc-moteur et la carter de la boîte de vitesses.

L'élément de support 7 comporte une paroi périphérique externe dont la surface interne est de forme cylindrique afin de coopérer avec la périphérie externe du stator 2. Le montage du stator 2 dans l'élément de support 7 peut être réalisé par frettage ou par montage par serrage à force. L'élément de support 7 présente également un voile interne 8, s'étendant à l'arrière du stator 2 et du rotor 3 et formant une paroi de séparation entre l'embrayage, d'une part, et la machine électrique 1, d'autre part. L'élément de support 7 définit également un logement 9 s'étendant à l'intérieur du rotor 3 et à l'intérieur duquel est destinée à être logée au moins partiellement une butée d'embrayage, non représentée. Un tel agencement permet d'optimiser l'encombrement axial de l'ensemble. Le logement est défini par une jupe axiale 10 et un fond 11 d'orientation radiale. Le fond 11 est pourvu d'un alésage permettant le passage de l'arbre intermédiaire 4.

Par ailleurs, un rebord axial 12 s'étend du fond 11 du logement 9, vers l'avant, et forme un alésage cylindrique de logement d'un roulement 13. Le fond 11 du logement 9 limite, côté moteur, l'alésage cylindrique de logement du roulement 13 et définit une surface radiale d'appui arrière du roulement 13. Le roulement 13 coopère, par ailleurs, avec l'arbre intermédiaire 4, à la faveur d'un épaulement qui définit une surface d'appui avant du roulement 4. Le roulement 13 permet ainsi le centrage de l'arbre intermédiaire 4 par rapport à l'élément de support 7.

Le roulement 13 comporte une bague externe, une bague interne et des corps roulants s'étendant entre lesdites bagues externe et interne. La bague externe est attelée axialement à l'élément de support 7 tandis que la bague interne est attelée axialement à l'arbre intermédiaire 4. Ainsi, le roulement 13 est axialement fixe par rapport à l'élément de support 7, d'une part, et à l'arbre intermédiaire 4, d'autre part. En outre, un tel montage du roulement 13 permet de maintenir axialement l'arbre intermédiaire 4 par rapport à l'élément de support 7. Afin d'atteler axialement les bagues interne et externe, celles-ci peuvent être emmanchées à force ou collées. De manière alternative, il est également possible d'utiliser un ou plusieurs organes de blocage, tels que des joncs ou circlips élastiques. Dans le mode de réalisation représenté, la bague interne est attelée axialement à l'arbre intermédiaire 4 par un circlip élastique 14.

Le rotor 3 est supporté par un moyeu 15. Le moyeu 15 comporte une jupe axiale de support du rotor 3. Le rotor 3 comporte un paquet de tôles qui est monté par frettage sur la surface externe de la jupe axiale. Ainsi, on monte à chaud le paquet de tôles par emmanchement sur la surface externe de la jupe axiale.

Le moyeu 15 de support du rotor 3 est guidé et centré en rotation sur l'élément de support 7 par l'intermédiaire d'un roulement 16. Pour ce faire, le rebord axial 12 qui s'étend du fond 11 du logement 9 présente une surface cylindre externe de support de la bague interne du roulement 16. Par ailleurs, la bague externe du roulement 16 coopère avec une surface cylindrique ménagée sur la surface interne du moyeu 15 du rotor 3 et limitée vers l'avant par un épaulement formé dans la surface interne du moyeu 15 de support du rotor 3.

Par ailleurs, le rotor 3 est couplé en rotation à l'arbre intermédiaire 4 par l'intermédiaire d'un réducteur mécanique 17, illustré de manière détaillée sur la figure 2 et de manière schématique sur la figure 3, qui est logé radialement à l'intérieur du rotor 3. Le réducteur mécanique 17 est composé d'un train d'engrenages épicycloïdal. Le train d'engrenages épicycloïdal comporte une première couronne dentée extérieure 18 portée par le moyeu 15 de support du rotor 3, une seconde couronne dentée extérieure 19 fixée à l'arbre intermédiaire 4 et des pignons satellites 20 à double dentures montés mobiles en rotation sur l'élément de support 7. Les pignons satellites 20 comportent une première denture 21 qui engrène avec la première couronne dentée 18 portée par le moyeu 15 de support du roto 3 et une seconde denture 22 qui engrène avec la seconde couronne dentée 19 fixée à l'arbre intermédiaire 4. La première denture 21 présente un diamètre supérieur à la seconde denture 22 de telle sorte que la vitesse de rotation du rotor 3 est supérieure à la vitesse de rotation de l'arbre intermédiaire 4. Il a été observé qu'un rapport de réduction compris entre 0,3 et 0,95 était particulièrement approprié afin d'optimiser les performances de l'amortisseur pendulaire 27 et de la machine électrique 1.

Les pignons satellites 20 sont chacun portés par l'intermédiaire d'un pion 23, notamment représenté sur la figure 1, qui présente une première extrémité insérée à l'intérieur d'un alésage central du pignon satellite 20 et une seconde extrémité insérée à l'intérieur d'un alésage ménagé dans l'élément de support 3. Dans le mode de réalisation représenté, l'alésage de logement du pion 23 est ménagé dans le rebord axial 12 qui s'étend du fond 11 du logement 9 et qui coopère, d'une part, avec le roulement 13 assurant le centrage de l'arbre intermédiaire 4 par rapport à l'élément de support 7 et, d'autre part, avec le roulement 16 assurant le centrage du moyeu 15 de support du rotor 3 sur l'élément de support 7.

La première couronnée dentée 18 peut être directement formée dans le moyeu 15 de support du rotor 3 ou être constituée d'une couronne rapportée qui est fixée sur le moyeu 15.

La seconde couronne dentée 19 comporte une jupe d'orientation axiale à l'intérieure de laquelle est ménagée sa denture et une portion annulaire 24 d'orientation radiale. L'extrémité avant de l'arbre intermédiaire 4 comporte une collerette 25 présentant un épaulement contre lequel vient en appui la portion annulaire 24. Des organes de fixation 26, tels que des vis, permettent de fixer la portion annulaire 24 à la collerette 25 de l'arbre intermédiaire 4. Ainsi, la seconde couronne dentée 19 est centrée par rapport à l'élément de support 7 par l'intermédiaire du roulement 13 et, par conséquent, par rapport au moyeu 15 de support du rotor 3 par l'intermédiaire du roulement 63.

Notons que, dans le mode de réalisation représenté, le train d'engrenages épicycloïdal est un train de type III, c'est-à-dire comportant des pignons satellites 20 à doubles dentures et deux planétaires : les premières et seconde couronnes dentées 18, 19. Bien qu'un tel train de type III soit particulièrement avantageux en ce qu'il offre un encombrement restreint et un équilibre des efforts satisfaisant, d'autres types de trains d'engrenage épicycloïdaux sont également envisageables.

Dans le mode de réalisation représenté, les dentures des pignons satellites 20 sont des dentures droites. De telles dentures droites permettent d'obtenir un train d'engrenages épicycloïdal parfaitement équilibré de telle sorte que le roulement 16 de guidage en rotation du moyeu 15 de support rotor 3 est optionnel. Dans un autre mode de réalisation, les dentures des pignons satellites 20 sont des dentures hélicoïdales, c'est-à-dire des dentures dont la génératrice de forme des dents est une ligne hélicoïdale autour de l'axe de rotation des pignons satellites 20. De telles dentures hélicoïdales présentent l'avantage d'être plus silencieuses que les dentures droites en créant moins de vibrations. Toutefois, en contrepartie, les dentures hélicoïdales engendrent des efforts axiaux. Ainsi, dans un tel mode réalisation, il conviendra d'utiliser des butées de reprise d'effort permettant de reprendre les efforts axiaux exercés sur le moyeu 15 de support du rotor 3 et sur l'arbre intermédiaire 4.

Dans un autre mode de réalisation, il est également possible d'utiliser un train épicycloïdal à dentures coniques, l'axe de rotation des pignons satellites 20 n'étant alors pas parallèle à l'axe de rotation X.

Par ailleurs, l'ensemble de transmission comporte un amortisseur pendulaire 27 et un amortisseur de torsion à organes élastiques 5.

L'amortisseur pendulaire 27 comporte un organe de support et une pluralité de masselottes pendulaires 28 circonférentiellement réparties sur l'organe de support. Les masselottes pendulaires 28 sont aptes à osciller par rapport à l'organe de support dans un plan orthogonal à l'axe de rotation X, en réaction aux irrégularités de rotation. L'organe de support est solidaire en rotation du rotor 3. En d'autres termes, la vitesse de rotation de l'organe de support est identique à celle du rotor 3.

Dans les modes de réalisation des figures 1, 4 et 5, l'organe de support comporte deux flasques annulaires 29, 30 s'étendant axialement de part et d'autre des masselottes pendulaires 28. Comme représenté sur les figures 4 et 5, l'un des flasques annulaires 30 est fixé au niveau d'un rebord radial du moyeu 15 de support du rotor 3. Par ailleurs, les deux flasques annulaires 29, 30 sont fixés l'un à l'autre au moyen d'organes de fixation 31, tels que des rivets.

Les oscillations des masselottes pendulaires 28 sont guidées par des moyens de guidage comportant, pour chaque masselotte pendulaire 28, deux rouleaux cylindriques de guidage 32, 33. Les extrémités des rouleaux de guidage 32, 33 coopèrent avec des premières pistes de guidage formées par le bord extérieur d'ouvertures ménagées dans les flasques annulaires 29, 30 de l'organe de support. Par ailleurs, les rouleaux de guidage 32, 33 passent au travers d'ouvertures ménagées dans les masselottes pendulaires 28. Les bords inférieurs des ouvertures ménagées dans les masselottes pendulaires 28 portent des secondes pistes de guidage. Les premières et les deuxièmes pistes de roulement présentent une forme générale épicycloïdale et sont agencées de telle sorte que la fréquence d'oscillation des masselottes pendulaires 28 soit proportionnelle à la vitesse de rotation du vilebrequin du moteur thermique. Pour plus de précisions quant à la structure des masselottes pendulaires 28 et des rouleaux de guidage 32, 33, on pourra notamment se reporter aux documents FR2912504, FR2989753, FR2986591 ou FR2986593 qui décrivent de manière détaillée des structures d'amortisseur pendulaire dans lesquelles les masselottes s'étendent entre deux flasques annulaires.

On note par ailleurs, que, dans un mode de réalisation alternatif, non représenté, l'organe de support ne comporte qu'un seul flasque annulaire et chaque masselotte pendulaire comporte deux flancs qui s'étendent axialement de part et d'autre dudit flasque annulaire et sont reliés axialement l'un à l'autre par l'intermédiaire de deux entretoises de liaison. De telles structures d'amortisseur pendulaire sont notamment décrites dans les documents FR2976641 et FR2981715.

Dans le mode de réalisation représenté sur la figure 1, l'amortisseur pendulaire 27 s'étend au moins partiellement dans le plan de l'interconnecteur, 6 radialement à l'intérieur de celui-ci. Ainsi, la présence de l'amortisseur pendulaire 27 n'a pas ou que peu d'impact sur l'encombrement axial de l'ensemble de transmission.

Dans le mode de réalisation représenté sur la figure 2, l'amortisseur pendulaire 27 s'étend radialement au-dessus de l'amortisseur de torsion à organes élastiques 5. Une telle disposition permet également de limiter l'impact de l'amortisseur pendulaire sur l'encombrement de l'ensemble de transmission. En outre, cette disposition permet également d'accroitre l'efficacité de l'amortisseur pendulaire 27 en décalant le centre de gravité des masselottes pendulaires 28 radialement vers l'extérieur.

Dans le mode de réalisation illustré sur la figure 5, l'amortisseur pendulaire est disposé, par rapport au rotor 3, du côté du moteur thermique. L'amortisseur pendulaire s'étend ainsi entre le voile interne 8 de l'élément de support 7 et le rotor 3. On note en outre que, comme dans le mode de réalisation de la figure 1, l'amortisseur pendulaire 27 s'étend au moins partiellement dans le plan de l'interconnecteur, 6 radialement à l'intérieur de celui-ci.

Dans les modes de réalisation représentés sur les figures 6 et 7, l'amortisseur pendulaire 27 est intégré dans la structure du rotor 3. Aussi, afin de permettre la visualisation de l'amortisseur pendulaire 27, seule une portion du rotor 3 est représentée. Une partie des tôles du paquet de tôles du rotor 3 sont découpées afin de ménager des espaces de logement des masselottes pendulaires 28. L'organe de support des masselottes pendulaires 28 est alors formé par des flasques annulaires disposés axialement de part et d'autre des espaces de logement des masselottes 28 et pourvus d'orifices dans lesquels sont insérées les extrémités des rouleaux de guidage 32, 33. Les flasques annulaires peuvent être formées par des tôles du paquets de tôles ou, alternativement, être formés par des éléments spécifiques insérés axialement entre les tôles du paquet de tôles et fixés sur le moyeu 15 de support du rotor 3 ou sur des tôles du paquet de tôle par soudure, par vissage, par rivetage ou par clinchage.

Dans un mode de réalisation, afin de ne pas perturber le fonctionnement de la machine électrique, l'organe de support et/ou les masselottes pendulaires 28 sont réalisés dans un matériau amagnétique, tel qu'un polymère ou de l'aluminium.

L'amortisseur de torsion à organes élastiques 5 comporte un élément d'entrée solidaire en rotation du rotor 3 et un élément de sortie configuré pour être couplé en rotation à l'arbre d'entrée de la boîte de vitesses 34. L'élément d'entrée comporte une rondelle de guidage avant 35 et une rondelle de guidage arrière 36. L'élément de sortie comporte un voile 37 et un moyen cannelé 38, fixé au voile 37 par l'intermédiaire de rivets 39, et destiné à coopérer avec des cannelures de forme complémentaire portées par l'extrémité arrière de l'arbre d'entrée de la boîte de vitesses 34.

Les rondelles de guidage avant 35 et arrière 36 sont disposées axialement de part et d'autre du voile 37. La rondelle de guidage arrière 36 est fixée au moyeu 15 de support de rotor 3 par l'intermédiaire d'organes de fixation 26, tels que des vis ou des rivets. Dans le mode de réalisation représenté, la rondelle de guidage arrière 36 et la seconde couronne dentée 19 sont fixées à la collerette 25 de l'arbre intermédiaire 4 par des organes de fixation 26 communs.

Les deux rondelles de guidage avant 35 et arrière 36 sont solidarisées en rotation, ici par l'intermédiaire d'ergots axiaux 43 portés par la rondelle de guidage avant 35.

L'amortisseur de torsion à organes élastiques 5 comporte une pluralité de groupes de deux organes élastiques 44 assurant un couplage entre les deux rondelles de guidage 35, 36 et le voile 37. Les organes élastiques 44 sont ici des organes élastiques droits répartis circonférentiellement sur un même diamètre autour de l'axe X. Chaque organe élastique 44 peut comporter deux ressorts coaxiaux montés l'un dans l'autre.

Les organes élastiques 44 sont logés dans des fenêtres ménagées dans les rondelles de guidage 35, 36. Par ailleurs, chaque groupe d'organes élastiques 44 s'étend, d'une part, entre deux sièges d'appui 40 portés par les rondelles de guidage 35, 36 et, d'autre part, entre deux pattes d'appui 41 circonférentiellement consécutives du voile 37.

Comme représenté sur la figure 6, les sièges d'appui 40 portés par les rondelles de guidage 35, 36 sont des pièces rapportées en forme de secteur angulaire qui sont fixés sur les rondelles de guidage 35, 36, de part et d'autre du voile 37, par l'intermédiaire de rivets.

Les organes élastiques 44 de chaque groupe sont montés en série par l'intermédiaire d'un organe de phasage 42. L'organe de phasage 42 est monté libre en rotation par rapport aux rondelles de guidage 35, 36, d'une part, et par rapport au voile 37, d'autre part. L'organe de phasage 42 comporte des pattes radiales de phasage, non représentées, qui sont chacune intercalées entre les deux organes élastiques 44 consécutifs d'un même groupe, de telle sorte que les deux organes élastiques 44 consécutifs d'un même groupe soient agencés en série. Les pattes radiales de phasage comportent deux faces d'appui sensiblement planes, formant un angle entre elles et servant à l'appui des extrémités des organes élastiques 44. L'organe de phasage 42 permet d'assurer une déformation des organes élastiques 37 en phase les uns avec les autres de telle sorte que les efforts élastiques générés dans l'amortisseur de torsion 5 sont répartis circonférentiellement, de manière homogène.

Ainsi, en fonctionnement, chaque groupe comporte un premier organe élastique 44 prenant appui à une première extrémité contre un siège d'appui porté par les rondelles de guidage 35, 36 et à une seconde extrémité contre une patte radiale de phasage de l'organe de phasage 42 alors que le second organe élastique 44 prend appui à une première extrémité contre ladite patte radiale de phasage de l'organe de phasage 42 et à une seconde extrémité contre une patte d'appui 41 du voile 37. Dès lors, une couple moteur est transmis des rondelles de guidage vers le voile par l'intermédiaire des organes élastiques.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, un embrayage ou un convertisseur de couple peut être disposé dans la chaîne de transmission entre la sortie de l'amortisseur à organes élastiques et l'arbre d'entrée de la boîte de vitesses.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Ensemble de transmission pour véhicule automobile, destiné à être disposé entre un moteur thermique présentant un vilebrequin et une boîte de vitesses présentant un arbre d'entrée, ledit ensemble comprenant :
- un élément de support (7) ;
- une machine électrique (1) comportant un stator (2) porté par l'élément de support (7) et un rotor (3) mobile en rotation autour d'un axe X, ledit rotor (3) présentant une ouverture centrale ;
- un arbre intermédiaire (4) passant au travers de l'ouverture centrale du rotor (3) et destiné, d'une part, à être mis en liaison cinématique avec le vilebrequin du moteur thermique et, d'autre part, à être mis en liaison cinématique avec l'arbre d'entrée de la boîte de vitesses ;
- un réducteur mécanique (17) agencé pour coupler en rotation le rotor (3) et l'arbre intermédiaire (4) de telle sorte que la vitesse de rotation du rotor (3) soit supérieure à la vitesse de rotation de l'arbre intermédiaire (4); et
- un amortisseur pendulaire (27) comportant un organe de support (29, 30) mobile en rotation autour de l'axe X et des masselottes pendulaires (28) montées mobiles sur l'organe de support (29, 30), l'organe de support (29, 30) étant solidaire en rotation du rotor (3)
dans lequel l'élément de support (7) présente une portion interne s'étendant à l'intérieur de l'ouverture centrale du rotor (3), dans lequel l'arbre intermédiaire (4) est centré et guidé en rotation sur ladite portion interne de l'élément de support (7) par l'intermédiaire d'un premier roulement (13) et dans lequel un moyeu (15) de support du rotor (3) est centré et guidé en rotation sur ladite portion interne de l'élément de support (7) par l'intermédiaire d'un second roulement (16).

2. Ensemble de transmission selon la revendication 1, dans lequel le réducteur mécanique (31) est un train d'engrenages épicycloïdal.

3. Ensemble de transmission selon la revendication 2, dans lequel le train d'engrenages épicycloïdal s'étend radialement à l'intérieur du rotor.

4. Ensemble de transmission selon la revendication 1 ou 2, dans lequel le train d'engrenages épicycloïdal comporte un première couronne dentée (18) portée par le moyeu (15) de support du rotor (3), une seconde couronne dentée (19) fixée à l'arbre intermédiaire (4) et des pignons satellites (20) montés mobiles en rotation sur l'élément de support (7) et s'étendant à l'intérieur desdites première et seconde couronnes dentées (18, 19), lesdits pignons satellites (20) étant chacun pourvus d'une première denture (21) en prise avec la première couronne dentée (19) et d'une seconde denture (22) en prise avec la seconde couronne dentée (20).

5. Ensemble de transmission selon l'une quelconque des revendications 1 à 5, dans lequel le rotor (3) est porté par un moyeu (15) de support et dans lequel l'organe de support (29, 30) de l'amortisseur pendulaire (27) est fixé sur le moyeu (15) de support du rotor (3).

6. Ensemble de transmission selon la revendication 5, dans lequel le stator (2) comporte des bobines circonférentiellement réparties autour de l'axe X et un interconnecteur (6) de forme annulaire, pour interconnecter les bobines, ledit interconnecteur (6) étant décalé axialement par rapport aux bobines et dans lequel l'amortisseur pendulaire (27) est au moins partiellement, logé radialement à l'intérieur de l'interconnecteur (6).

7. Ensemble de transmission selon la revendication 5, comportant un amortisseur de torsion à organes élastiques (5) agencé pour transmettre un couple et amortir les acyclismes de rotation entre l'arbre intermédiaire (4) et l'arbre d'entrée de la boîte de vitesses (34) et dans lequel l'amortisseur pendulaire (27) est au moins partiellement disposé dans le plan de l'amortisseur de torsion à organes élastiques (5) et s'étend radialement au-dessus de l'amortisseur de torsion à organes élastiques (5).

8. Ensemble de transmission selon l'une quelconque des revendications 1 à 4, dans lequel l'amortisseur pendulaire (27) est intégré dans le corps du rotor (3).

9. Ensemble de transmission selon la revendication 8, dans lequel le rotor (3) comporte un corps formé d'un paquet de tôles empilées axialement et dans lequel une partie des tôles du paquet de tôles présentent des découpes définissant des espaces de logement des masselottes pendulaires (28).

10. Ensemble de transmission selon la revendication 9, dans lequel les masselottes pendulaires (28) sont montées mobiles sur l'organe de support par l'intermédiaire de rouleaux de guidage (32, 33) engagés dans des orifices des masselottes et dans lequel l'organe de support des masselottes pendulaires (28) comporte des flasques annulaires qui sont disposés axialement de part et d'autre des espaces de logement des masselottes pendulaires (28) et sont pourvus d'orifices dans lesquels sont engagées les extrémités des rouleaux de guidage (32, 33).

11. Ensemble de transmission selon la revendication 10, dans lequel les flasques annulaires sont formés par des tôles du paquet de tôles.

12. Ensemble de transmission selon l'une quelconque des revendications 1 à 11, dans lequel l'organe de support (29, 30) et/ou les masselottes pendulaires (28) sont réalisés dans un matériau amagnétique.

13. Véhicule automobile équipé d'un ensemble de transmission selon l'une quelconque des revendications 1 à 12.

## Patentansprüche

1. Getriebeanordnung für ein Kraftfahrzeug, die dazu bestimmt ist, zwischen einem Verbrennungsmotor mit einer Kurbelwelle und einem Getriebe mit einer Eingangswelle angeordnet zu sein, die Anordnung umfassend:
- ein Tragelement (7);
- eine elektrische Maschine (1) mit einem Stator (2), der von dem Tragelement (7) getragen wird, und einem Rotor (3), der um eine X-Achse drehbeweglich ist, wobei der Rotor (3) eine Mittelöffnung aufweist;
- eine Zwischenwelle (4), die durch die Mittelöffnung des Rotors (3) verläuft und einerseits dazu bestimmt ist, mit der Kurbelwelle des Verbrennungsmotors in kinematische Verbindung gebracht zu werden, und andererseits mit der Eingangswelle des Getriebes in kinematische Verbindung gebracht zu werden;
- ein mechanisches Reduktionsgetriebe (17), das angeordnet ist, den Rotor (3) und die Zwischenwelle (4) so drehbar zu koppeln, dass die Drehzahl des Rotors (3) höher als die Drehzahl der Zwischenwelle (4) ist; und
- einen Pendeldämpfer (27) mit einem Tragglied (29, 30), das um die X-Achse drehbeweglich ist, und Pendelgewichten (28), die beweglich auf dem Tragglied (29, 30) gelagert sind, wobei das Tragglied (29, 30) drehfest mit dem Rotor (3) verbunden ist, wobei das Tragelement (7) einen inneren Abschnitt aufweist, der sich innerhalb der Mittelöffnung des Rotors (3) erstreckt, wobei die Zwischenwelle (4) auf dem inneren Abschnitt des Tragelements (7) mittels eines ersten Lagers (13) zentriert und drehbar geführt ist, und wobei eine Tragnabe (15) des Rotors (3) auf dem inneren Abschnitt des Tragelements (7) mittels eines zweiten Lagers (16) zentriert und drehbar geführt ist.

2. Getriebeanordnung nach Anspruch 1, wobei das mechanische Reduktionsgetriebe (31) ein Planetengetriebe ist.

3. Getriebeanordnung nach Anspruch 2, wobei sich das Planetengetriebe radial innerhalb des Rotors erstreckt.

4. Getriebeanordnung nach Anspruch 1 oder 2, wobei das Planetengetriebe einen ersten Zahnkranz (18), der von der Tragnabe (15) des Rotors (3) getragen wird, einen zweiten Zahnkranz (19), der an der Zwischenwelle (4) befestigt ist, und Umlaufräder (20), die an dem Tragelement (7) drehbeweglich angebracht sind und sich innerhalb des ersten und zweiten Zahnkranzes (18, 19) erstrecken, aufweist, wobei die Umlaufräder (20) jeweils mit einer ersten Zahnung (21) in Eingriff mit dem ersten Zahnkranz (19) und einer zweiten Zahnung (22) in Eingriff mit dem zweiten Zahnkranz (20) versehen sind.

5. Getriebeanordnung nach einem der Ansprüche 1 bis 5, wobei der Rotor (3) von einer Tragnabe (15) getragen wird, und wobei das Tragglied (29, 30) des Pendeldämpfers (27) auf der Tragnabe (15) des Rotors (3) befestigt ist.

6. Getriebeanordnung nach Anspruch 5, wobei der Stator (2) Spulen, die in Umfangsrichtung um die X-Achse verteilt sind, und einen ringförmigen Verbinder (6) zum Verbinden der Spulen aufweist, wobei der Verbinder (6) bezogen auf die Spulen axial versetzt ist, und wobei der Pendeldämpfer (27) zumindest teilweise radial innerhalb des Verbinders (6) aufgenommen ist.

7. Getriebeanordnung nach Anspruch 5, die einen Torsionsdämpfer mit elastischen Elementen (5) aufweist, der angeordnet ist, ein Drehmoment zu übertragen und die Drehungleichförmigkeiten zwischen der Zwischenwelle (4) und der Eingangswelle des Getriebes (34) zu dämpfen, und wobei der Pendeldämpfer (27) zumindest teilweise in der Ebene des Torsionsdämpfers mit elastischen Elementen (5) angeordnet ist und sich radial über dem Torsionsdämpfer mit elastischen Elementen (5) erstreckt.

8. Getriebeanordnung nach einem der Ansprüche 1 bis 4, wobei der Pendeldämpfer (27) in den Körper des Rotors (3) integriert ist.

9. Getriebeanordnung nach Anspruch 8, wobei der Rotor (3) einen Körper aufweist, der von einem Paket von Blechen gebildet ist, die axial gestapelt sind, und wobei ein Anteil der Bleche des Pakets von Blechen Ausschnitte aufweisen, die Räume zur Aufnahme der Pendelgewichte (28) definieren.

10. Getriebeanordnung nach Anspruch 9, wobei die Pendelgewichte (28) mittels Führungsrollen (32, 33), die in Öffnungen der Gewichte eingreifen, beweglich auf dem Tragelement gelagert sind, und wobei das Tragelement der Pendelgewichte (28) ringförmige Flansche aufweist, die beiderseits der Räume zur Aufnahme der Pendelgewichte (28) axial angeordnet sind und mit Öffnungen versehen sind, in welche die Enden der Führungsrollen (32, 33) eingreifen.

11. Getriebeanordnung nach Anspruch 10, wobei die ringförmigen Flansche von Blechen des Pakets von Blechen gebildet sind.

12. Getriebeanordnung nach einem der Ansprüche 1 bis 11, wobei das Tragglied (29, 30) und/oder die Pendelgewichte (28) aus einem nichtmagnetischen Material hergestellt sind.

13. Kraftfahrzeug, das mit einer Getriebeanordnung nach einem der Ansprüche 1 bis 12 ausgerüstet ist.

## Claims

1. A transmission assembly for a motor vehicle, intended to be arranged between a combustion engine having a crankshaft and a gearbox having an input shaft, said assembly comprising:
- a support element (7);
- an electric machine (1) having a stator (2) carried by the support element (7) and a rotor (3) rotationally movable around an axis X, said rotor (3) having a central opening;
- an intermediate shaft (4) passing through the central opening of the rotor (3) and intended on the one hand to be connected kinematically to the crankshaft of the combustion engine and on the other hand to be connected kinematically to the input shaft of the gearbox;
- a mechanical reducer (17) configured to rotationally couple the rotor (3) and the intermediate shaft (4) in such a way that the rotation speed of the rotor (3) is higher than the rotation speed of the intermediate shaft (4); and
- a pendulum damper (27) having a support member (29, 30) rotationally movable around the axis X, and pendulum flyweights (28) mounted movably on the support member (29, 30), the support member (29, 30) being rotationally integral with the rotor (3), in which
- a support element (7) has an inner portion extending inside the central opening of the rotor (3); in which the intermediate shaft (4) is centered and rotationally guided on said inner portion of the support element (7) by means of a first bearing (13); and in which a support hub (15) of the rotor (3) is centered and rotationally guided on said inner portion of the support element (7) by means of a second bearing (16).

2. The transmission assembly according to Claim 1, in which the mechanical reducer (31) is an epicyclic gear train.

3. The transmission assembly according to Claim 2, in which the epicyclic gear train extends radially inside the rotor.

4. The transmission assembly according to Claim 1 or 2, in which the epicyclic gear train has a first ring gear (18) carried by the support hub (15) of the rotor (3), a second ring gear (19) fastened to the intermediate shaft (4), and satellite gears (20) mounted rotationally movably on the support element (7) and extending inside said first and second ring gears (18, 19), said satellite gears (20) each being provided with a first tooth set (21) meshing with the first ring gear (19) and a second tooth set (22) meshing with the second ring gear (20).

5. The transmission assembly according to any one of Claims 1 to 4, in which the rotor (3) is carried by a support hub (15); and in which the support member (29, 30) of the pendulum damper is fastened on the support hub (15) of the rotor (3).

6. The transmission assembly according to Claim 5, in which the stator (2) has coils distributed circumferentially around the axis X and an annularly shaped interconnector (6) to interconnect the coils, said interconnector (6) being offset axially with respect to the coils; and in which the pendulum damper (27) is at least partly received radially inside the interconnector (6).

7. The transmission assembly according to Claim 5, having an elasticmember torsional damper (5) configured to transmit a torque and to damp rotational irregularities between the intermediate shaft (4) and the input shaft (34) of the gearbox; and in which the pendulum damper (27) is at least partly arranged in the plane of the elastic-member torsional damper (5) and extends radially above the elastic-member torsional damper (5).

8. The transmission assembly according to any one of Claims 1 to 4, in which the pendulum damper (27) is integrated into the body of the rotor (3).

9. The transmission assembly according to Claim 8, in which the rotor (3) has a body constituted by an axially stacked metal-sheet package; and in which some of the metal sheets of the metal-sheet package have cutouts defining receiving spaces for the pendulum flyweights (28).

10. The transmission assembly according to Claim 9, in which the pendulum flyweights (28) are mounted movably on the support member by means of guidance rollers (32, 33) engaged into orifices of the flyweights; and in which the support member for the flyweights (28) has annular flanges that are arranged axially on either side of the receiving spaces for the pendulum flyweights (28) and are equipped with orifices into which the ends of the guidance rollers (32, 33) are engaged.

11. The transmission assembly according to Claim 10, in which the annular flanges are constituted by metal sheets of the metal-sheet package.

12. The transmission assembly according to any one of Claims 1 to 11, in which the support member (29, 30) and/or the pendulum flyweights (28) are produced from a nonmagnetic material.

13. A motor vehicle equipped with a transmission assembly according to any one of Claims 1 to 12.
